# FASCICULE DE BREVET EUROPEEN

(11) **EP 3 369 335 B1**
(45) Date de publication et mention de la délivrance du brevet: **29.01.2020**
(21) Numéro de dépôt: 18000202.4
(22) Date de dépôt: 02.03.2018
(51) Int. Cl.: A45C 3/04, G06K 19/077

(54) **SAC REUTILISABLE AVEC PUCE ELECTRONIQUE**
WIEDERVERWENDBARER BEUTEL MIT ELEKTRONISCHEM CHIP
REUSABLE BAG WITH ELECTRONIC CHIP

(30) Priorité: 02.03.2017 FR 1751696
(43) Date de publication de la demande: 05.09.2018
(73) Titulaire: Tracking Pack, 87600 Rochechouart (FR)
(72) Inventeur: GRZESKOWIAK, Gilles, 87600 Rochechouart (FR)
(74) Mandataire: Corret, Hélène

(56) Documents cités:
- WO-A1-03/024814
- WO-A1-2011/102812
- WO-A1-2013/110561
- WO-A1-2014/081520
- US-A1- 2011 225 106
- US-A1- 2011 270 696
- US-A1- 2012 062 367
- US-A1- 2014 216 603
- US-A1- 2015 296 939
- US-A1- 2016 058 149
- US-B1- 9 495 851

## Description

La présente invention concerne le domaine des emballages pour produits notamment alimentaires que ceux-ci soient offerts à la vente en vrac ou à la coupe.

Des produits en vrac sont par exemple des fruits et des légumes proposés dans des commerces de détail ou des grandes surfaces.

Par ailleurs, les rayons « vente à la coupe » proposent aux consommateurs d'autres types de produits comme la viande, le fromage ou encore des plats préparés.

De façon classique, pour chaque type de produit en vrac, le commerçant ou le consommateur procède à un choix de certaines pièces parmi un type de produit puis dépose ces pièces dans un emballage qui est enfin pesé pour déterminer le prix des pièces choisies.

Dans le cas des produits vendus à la coupe, c'est le commerçant lui-même qui procède à la préparation du produit et à son emballage, puis à sa pesée.

Le prix des produits peut être indiqué sur une étiquette qui est directement collée sur l'emballage et le consommateur procèdera au règlement lors de son passage en caisse avec le reste de ses achats.

Dans le cas où le commerçant procède lui-même à la pesée, tous les achats relevant de différents types de produit sont comptabilisés sur la même balance qui édite un ticket de caisse global.

Pendant de nombreuses années, les emballages utilisés étaient en matière plastique et à usage unique.

Les contraintes environnementales et réglementaires conduisent à proposer aux consommateurs des sacs en papier qui présentent l'avantage d'être recyclables.

Cependant, ces sacs en papier présentent également des inconvénients.

Ils sont, en effet, plus coûteux que des sacs en plastique.

Par ailleurs, dans le cas où le consommateur procède lui-même à la pesée des produits, il est difficile, sans ouvrir les sacs, de contrôler lors du passage en caisse si les produits ont été correctement identifiés, dans la mesure où ces sacs en papier sont opaques.

Le document US9495851 divulgue un emballage réutilisable comportant une puce électronique.

L'invention a pour objet de pallier ces inconvénients en proposant un emballage pour produits différents, offerts à la vente en vrac ou à la coupe, notamment des produits alimentaires, qui réduit considérablement la consommation de matière, qu'elle soit ou non polluante, qui permet de réduire les coûts liés à l'utilisation de cet emballage et qui facilite également les opérations d'achat des produits, tout en sécurisant ces opérations pour le commerçant.

Ainsi, l'invention concerne un emballage réutilisable, pour différents produits en vrac ou à la coupe, notamment des produits alimentaires, comportant une puce électronique capable d'interagir avec une station de base comprenant des moyens de lecture/écriture, ladite puce comportant une mémoire dont une première zone peut être verrouillée de façon à y stocker de manière successive et sécurisée des informations relatives à la nature des produits, leur pesée et/ou leur prix.

Le terme puce électronique est communément utilisé pour désigner un circuit intégré.

Cet emballage répond aux attentes des consommateurs qui sont aujourd'hui réticents à utiliser des emballages jetables, en évitant l'utilisation d'emballages à usage unique.

L'invention contribue donc à la transition énergétique en réduisant l'utilisation de matières premières du type carton ou plastique ou recyclées.

Par ailleurs, cet emballage rend inutile les étiquettes portant les informations relatives à la pesée et/ou aux prix des produits, ce qui élimine les encres et solvants nécessaires à l'impression de ces étiquettes et réduit encore les risques de pollution.

Enfin, lors du passage en caisse, les informations relatives à la nature des différents produits pesés, leur poids et/ou leur prix sont centralisées dans la puce présente dans l'emballage, ce qui évite de manipuler une pluralité de conditionnements pour scanner l'étiquette présente sur chaque conditionnement renfermant des produits d'une même nature.

Enfin, ces informations ne peuvent pas être falsifiées avant le passage en caisse, puisqu'elles sont stockées dans une zone qui peut être verrouillée. Ceci contribue à la sécurisation des opérations pour le commerçant.

Dans des modes de réalisation avantageux, on a par ailleurs et/ou de plus recours à l'une et/ou à l'autre des dispositions suivantes :
- la mémoire de la puce comprend une deuxième zone du type non volatile dans laquelle sont enregistrées de manière inaltérable les informations relatives à la date de fabrication de l'emballage, son identification et/ou au fabricant ;
- l'emballage est réalisé dans une matière au moins en partie transparente, ce qui permet de faciliter le contrôle des opérations de pesée en vérifiant facilement et sans ouvrir l'emballage que les produits ont bien été identifiés par le consommateur ;
- l'emballage peut être réalisé en une matière ajourée ;
- l'emballage peut être réalisé en une matière recyclable ;
- l'emballage peut être réalisé en jute et/ou en coton ou encore en fibres de bambou ;
- l'emballage peut être réalisé en un matériau stérilisable ;
- l'emballage présente la forme d'un sac avec des anses pour pouvoir être facilement transporté par un consommateur ;
- l'emballage présente la forme d'un récipient délimitant au moins un compartiment ;
- l'emballage comporte au moins deux compartiments, pour pouvoir être utilisé pour deux types de produit différents ;
- chaque compartiment comporte des moyens de fermeture, pour éviter le mélange de deux types de produit différents ;
- les moyens de fermeture sont inviolables.

L'invention concerne également un ensemble comportant un sac et plusieurs emballages selon l'invention, ces emballages étant contenus dans le sac.

L'invention concerne également un procédé d'emballage et de pesée d'au moins un type de produits offerts à la vente en vrac ou la coupe, notamment des produits alimentaires, comprenant les étapes suivantes :
(a) dépôt de produits du même type dans un emballage selon l'invention
(b) dépôt dudit emballage sur une balance comportant une station de base avec des moyens de lecture/écriture en vue de sa pesée et
(c) enregistrement des informations relatives à la nature, la pesée et/ou au prix des produits du même type dans ladite première zone de la mémoire présente dans la puce de l'emballage, cette première zone étant ensuite verrouillée.

De manière avantageuse :
- les étapes (a) à (c) sont réitérées pour chaque type de produits, l'étape (b) étant alors une pesée différentielle.
- entre les étapes (a) et (b), l'emballage est fermé, de préférence de manière inviolable.
- Le procédé est suivi d'une étape (d) de règlement des achats, lors de laquelle il est procédé à la lecture de ladite première zone de la mémoire.
- l'étape (b) et/ou l'étape (d) est précédée d'une étape de détection/vérification de la puce dudit emballage.
- après l'étape (d), ladite première zone de la mémoire est déverrouillée et effacée.

L'invention concerne enfin :
- un système d'emballage et de pesée de produits offerts en vente en vrac ou à la coupe, notamment des produits alimentaires, comprenant :
   une balance comportant une station de base avec des moyens de lecture/écriture et
   au moins un emballage réutilisable selon l'invention capable d'interagir avec la station de base de la balance.
- un système d'encaissement du prix de produits offerts en vente en vrac ou à la coupe, notamment des produits alimentaires, comprenant :
   un système d'emballage et de pesée selon l'invention et
   une caisse comprenant une station de base avec des moyens de lecture/écriture, ledit au moins un emballage réutilisable étant capable d'interagir avec la station de base de la caisse.

L'invention sera mieux comprise et d'autres buts, avantages et caractéristiques apparaîtront plus clairement à la lecture de la description qui suit de modes de réalisation donnés à titre d'exemples non limitatifs.

La description se réfère aux dessins qui l'accompagnent dans lesquels :
La figure 1 est une vue en perspective d'un premier exemple de réalisation d'un emballage selon l'invention.
La figure 2 est une vue en perspective d'un autre exemple de réalisation d'un emballage selon l'invention.
La figure 3 illustre schématiquement les différentes étapes du procédé selon l'invention.

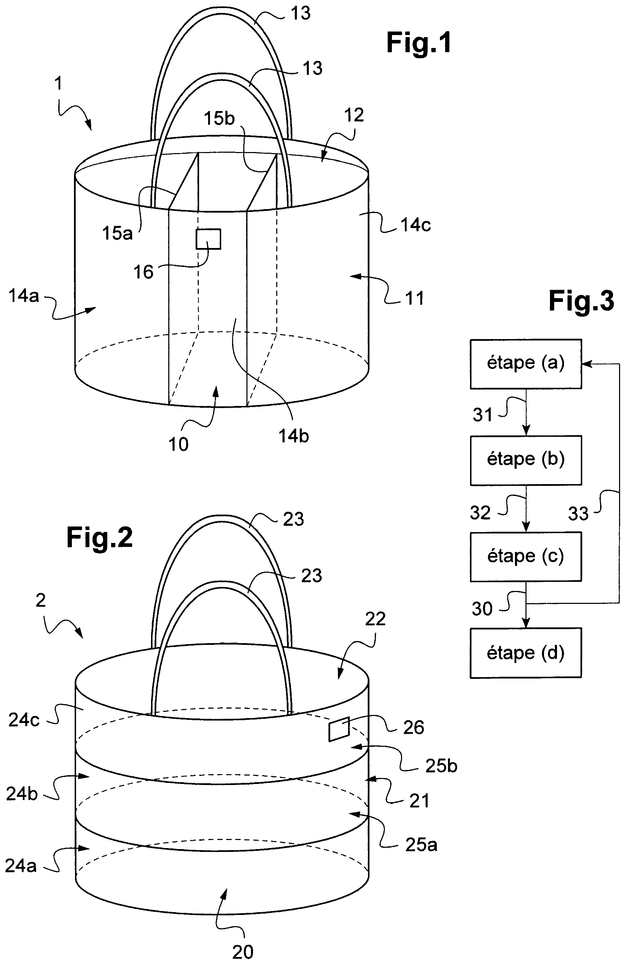

La figure 1 illustre un sac réutilisable selon l'invention qui comprend un corps 1 avec un fond 10 fermé et une paroi latérale 11 prolongeant le fond 10 et délimitant, à l'opposé du fond 10, une ouverture 12.

Une puce électronique 16 est fixée, ou intégrée de quelque manière que ce soit, au corps 1. Dans l'exemple illustré à la figure 1, la puce 16 est fixée sur la paroi latérale 11 du sac.

Dans tous les cas, la puce électronique comprend une mémoire dans laquelle des données peuvent être écrites et qui peut être lue (read/write chip dans la terminologie anglaise).

Une première zone peut, de préférence, être verrouillée après une opération d'écriture, seule une opération de lecture étant alors possible (sans déverrouillage préalable) et une deuxième zone de la mémoire est non volatile (mémoire de type ROM).

La puce est également capable d'interagir avec une station de base comprenant des moyens de lecture/écriture et ce, sans contact.

Elle comprend des moyens appropriés pour assurer la communication avec cette station de base.

La liaison entre la puce et la station de base est par exemple réalisée au moyen d'un signal optique ou électromagnétique, notamment un signal radiofréquence.

C'est pourquoi une antenne est associée à la puce pour permettre cette liaison grâce à un signal radiofréquence. L'association d'une puce et d'une antenne est classiquement dénommée tag (dans la terminologie anglo-saxonne). Par extension, on dénommera également puce électronique, un circuit intégré associé à une antenne (puce RFID).

A titre d'exemple, on peut choisir une puce du type Monza® R6-P (fabriquée par la société Impinj) ou du type SL3S1205_15 (fabriquée par la société NXP).

Lors de la fabrication du sac, dans la deuxième zone de la mémoire, sont enregistrées des informations relatives à la date de fabrication du sac, son identification (par exemple son numéro de série) et/ou au fabricant.

Cette deuxième zone de la mémoire étant non volatile, la puce et donc le sac, peuvent être ainsi identifiés de façon unique, inaltérable et lisible.

La puce électronique sera, de préférence, de petite taille, souple et résistante à l'eau.

Elle pourra être directement intégrée à la matière constitutive du sac. Par exemple, lorsque le sac est réalisé en un tissu ou un non-tissé, la puce pourra être intégrée à un fil utilisé pour réaliser le sac.

Cet emballage comprend, de préférence, au moins une poignée ou anse 13. Elles sont ici au nombre de deux et permettent à l'utilisateur de transporter facilement l'emballage.

Dans l'exemple de réalisation illustré à la figure 1, l'emballage comporte trois compartiments 14a à 14c qui sont délimités par deux parois verticales 15a et 15b. Ces parois verticales s'étendent depuis le fond 10 jusqu'à l'ouverture 12 et sont solidarisées avec la paroi latérale 11 de l'emballage.

Ainsi, les compartiments 14a à 14c s'étendent également verticalement depuis le fond 10 jusqu'à l'ouverture 12.

L'emballage peut également comporter des moyens de fermeture, non illustrés sur la figure 1, permettant de fermer chaque compartiment 14a à 14c au niveau de l'ouverture 12.

De façon avantageuse, ces moyens de fermeture peuvent être conçus pour être inviolables, c'est-à-dire pour pouvoir identifier une ouverture du compartiment avant le passage en caisse. Ils peuvent notamment consister en un lien autobloquant à usage unique, lequel ne peut être ouvert qu'en étant coupé.

Cet emballage peut être réalisé dans toute matière recyclable.

De préférence, il sera réalisé dans une matière au moins en partie transparente pour permettre d'identifier facilement les produits qui sont placés dans chaque compartiment, sans qu'il soit nécessaire d'ouvrir l'emballage, notamment lorsque les compartiments 14a à 14c sont fermés.

La matière utilisée peut être notamment une toile de jute et/ou de coton ou de fibres de bambou dont le tissage lâche permet de qualifier cette matière de semi-transparente.

Il est maintenant fait référence à la figure 2 qui illustre un autre de mode de réalisation d'un emballage selon l'invention.

Là encore, le corps 2 comporte un fond 20 fermé qui se prolonge par une paroi latérale 21, laquelle délimite, à l'opposé du fond 20, une ouverture 22.

Une puce électronique 26 est fixée, ou intégrée de quelque manière que ce soit au corps 2. Elle est ici fixée à la paroi latérale 21 du corps 2.

C'est au niveau de cette ouverture que sont prévues ici deux poignées 23.

Cet emballage diffère de celui illustré à la figure 1 en ce que les compartiments 24a à 24c sont définis par des parois 25a, 25b qui sont sensiblement parallèles au fond 20.

Ainsi, chacun des compartiments 24a à 24c s'étend horizontalement.

On comprend que chacune des parois 25a et 25b sont au moins partiellement amovibles pour permettre l'introduction de produits dans les compartiments 24a et 24b.

Ainsi, les parois 25a et 25b sont au moins partiellement retirées pour permettre l'introduction de produits dans le compartiment 24a, la paroi 25a étant ensuite mise en place.

La paroi 25b est, quant à elle, remise en place, après introduction de produits dans le compartiment 24b.

Enfin, des moyens non illustrés sur la figure 2, peuvent être prévus pour fermer l'emballage au niveau de l'ouverture 22, après l'introduction de produits dans le compartiment 24c.

Là encore, ces moyens de fermeture sont avantageusement conçus pour être inviolables, comme mentionné au regard de la figure 1.

Comme pour l'emballage illustré à la figure 1, cet emballage est avantageusement réalisé en une matière au moins partiellement transparente, comme par exemple une toile de jute.

Un autre mode de réalisation d'un emballage selon l'invention consiste en un récipient, fermé par un couvercle, réalisé de préférence en une matière recyclable et stérilisable, par exemple en verre ou en PET.

Là encore, une puce électronique est fixée ou intégrée à l'emballage.

Un tel emballage sera utilisé pour des produits préalablement coupés selon les souhaits du consommateur, par exemple une pièce de viande ou un morceau de fromage. C'est le commerçant qui procède à la coupe du produit, à la dépose dans le récipient et à la fermeture du récipient.

Comme précédemment, les moyens de fermeture seront avantageusement conçus pour être inviolables. A ce titre, des pastilles de scellement (se déchirant lorsque le couvercle est ouvert) pourront être apposées pour vérifier que l'emballage n'a pas été ouvert avant le passage en caisse.

Un tel emballage pourra être conçu pour un seul produit ou comporter plusieurs compartiments (et donc plusieurs couvercles).

L'utilisation d'un emballage conforme aux figures 1 ou 2 par un consommateur et un commerçant va maintenant être décrite en référence à la figure 3.

Dans une étape (a) du procédé, le consommateur commence par placer des produits d'un premier type dans le compartiment 14a par exemple, ou dans le compartiment 24a.

Il peut alors procéder à la fermeture du compartiment. En ce qui concerne le compartiment 24a, cette fermeture consiste à remettre en place la paroi 25a.

Le consommateur procède alors (flèche 31) à l'étape (b) consistant à placer l'emballage sur une balance pour procéder à la pesée des produits placés dans le compartiment 14a ou 24a.

La balance comporte une station de base avec des moyens de lecture et des moyens d'écriture dans une mémoire, ainsi que des moyens de détection et d'identification du type « reader talk first » dans la terminologie anglo-saxonne.

La balance comporte également, de préférence, une horloge.

La balance comporte également, de manière classique, un clavier (par exemple à pictogrammes) grâce auquel le consommateur peut indiquer à la balance la nature des produits placés dans un compartiment donné de l'emballage.

Elle peut aussi comporter des moyens de reconnaissance de forme.

L'information donnée par ces moyens est alors comparée à celle indiquée par le consommateur. La pesée ne sera réalisée que si les informations sont compatibles entre elles.

Les moyens de détection et d'identification, de manière classique, émettent un signal, par exemple électromagnétique, et la puce de l'emballage placé sur la balance répond à ce signal en transmettant les informations stockées dans la deuxième zone de la mémoire. Ces moyens peuvent ainsi déterminer si l'emballage comporte une puce compatible avec la balance.

Dans la négative, le consommateur est informé par un signal sonore et/ou lumineux que la pesée ne peut pas avoir lieu et qu'il doit retirer l'emballage.

Dans l'affirmative, la pesée est réalisée et le consommateur en sera informé par un signal sonore et/ou lumineux. Ce signal lui indique également qu'il peut retirer l'emballage de la balance.

Les moyens de lecture/écriture de la station de base de la balance enregistrent alors, dans la première zone de la mémoire de la puce 16, 26, les informations relatives à la nature des produits, leur pesée et/ou à leur prix, ainsi que, de préférence, la date et l'heure de la pesée.

L'enregistrement de ces informations a lieu lors de l'étape (c), qui suit l'étape (b) (flèche 32).

Cette étape d'enregistrement comporte, en pratique, une opération d'écriture dans un champ de la première zone de la mémoire puis une opération de lecture pour vérifier les informations préalablement écrites.

De préférence, les moyens de lecture/écriture commandent ensuite les moyens de verrouillage de ce champ de la première zone, de façon à ce que les informations enregistrées ne puissent être accessibles qu'en lecture. Ceci permet d'assurer que ces informations ne seront pas altérées avant le passage en caisse.

Si le consommateur ne souhaite pas acheter d'autres produits, il peut directement passer en caisse pour régler son achat et procéder à l'étape (d) (flèche 30).

S'il souhaite acheter d'autres produits, il réalise de nouveau l'étape (a) (flèche 33) avec des produits d'un autre type, ces produits étant alors placés dans le compartiment 14b par exemple, ou dans le compartiment 24b.

Il peut alors procéder à la fermeture du compartiment. Dans le cas du compartiment 24b, cette fermeture consiste à remettre en place la paroi 25b.

Comme précédemment, il procède à l'étape (b) de pesée de l'emballage. Le consommateur dépose donc l'emballage sur la balance. Comme précédemment, les moyens de détection/identification de la station de base de la balance déterminent si l'emballage comporte une puce compatible avec la balance.

Dans l'affirmative, les moyens de lecture/écriture lisent les informations déjà stockées dans la deuxième zone de mémoire.

En premier lieu, les informations concernant la date et l'heure sont de préférence comparées avec celles provenant de la balance.

La pesée n'est ainsi autorisée que si les écarts entre les deux dates et heures ne sont pas supérieurs aux seuils préalablement enregistrés dans la balance.

Si la pesée est autorisée, les moyens de lecture/écriture lisent les informations concernant la pesée précédente et notamment le poids des produits présents dans le compartiment 14a ou 24a.

La balance procède alors à une pesée différentielle de façon à déterminer le poids et donc le prix des produits placés dans le compartiment 14b ou le compartiment 24b.

Comme précédemment, la balance connait la nature des produits placés dans le compartiment 14b ou 24b grâce à l'indication donnée par le consommateur (éventuellement contrôlée par la balance).

Là encore, dans cette étape (c), la balance enregistre dans un autre champ de la première zone de la mémoire de la puce 16, 26, les informations relatives à la nature des produits placés dans le compartiment 14b ou 24b, leur pesée et/ou à leur prix ainsi que, de préférence, la date et l'heure de la pesée, comme cela a été décrit précédemment.

De préférence, la station de base commande les moyens de verrouillage pour que ces informations enregistrées ne soient accessibles qu'en lecture.

On peut encore noter que des bornes d'information peuvent également être prévues dans le magasin où le consommateur effectue ses achats.

Chaque borne comporte une station de base avec des moyens de lecture et, de préférence, des moyens de détection et d'identification.

Ainsi, lorsque le consommateur souhaite connaître la nature et le prix des produits placés dans l'emballage et qui ont été pesés, il place cet emballage à proximité de la borne.

Celle-ci détermine, dans un premier temps, si l'emballage comporte une puce compatible avec la borne.

Dans la négative, le consommateur en est informé.

Dans l'affirmative, les moyens de lecture de la station de base procèdent à la lecture des informations présentes dans la première zone de la mémoire de la puce. La borne en informe le consommateur, par exemple par un signal visuel (ou sonore).

Le consommateur peut passer en caisse pour régler ses achats ou encore utiliser le troisième compartiment 14c, 24c pour y introduire des produits d'un autre type, les étapes (a) à (c) étant alors réalisées comme décrit précédemment pour les produits placés dans le compartiment 14c, 24c.

On comprend donc que l'enregistrement des informations relatives à la pesée est effectué de manière successive et cumulative.

En d'autres termes, les informations relatives à chaque pesée sont enregistrées successivement et sont conservées dans la mémoire de la puce au moins jusqu'au passage en caisse.

Lorsque des moyens de fermeture sont prévus, le consommateur peut alors fermer son emballage et passer en caisse. Il peut s'agir d'une caisse assistée ou d'une caisse totalement automatique.

La caisse comporte elle aussi une station de base avec des moyens de lecture et d'écriture dans une mémoire ainsi que des moyens de détection et d'identification.

La caisse comporte également, de préférence, une horloge.

Les moyens de détection et d'identification, de manière classique, émettent un signal, par exemple électromagnétique, et la puce répond à ce signal en transmettant les informations stockées dans la deuxième zone de la mémoire. Ces moyens peuvent ainsi déterminer si l'emballage comporte une puce compatible avec la caisse.

Dans la négative, le consommateur est informé du problème.

Dans l'affirmative, les moyens de lecture/écriture lisent les informations stockées dans la première zone de la mémoire.

En premier lieu, les informations concernant la date et l'heure sont de préférence comparées avec celles provenant de la caisse.

La lecture des informations relatives aux pesées successives n'est autorisée que si les écarts entre la date et éventuellement l'heure d'une pesée (par exemple la plus ancienne) et la date et éventuellement l'heure données par l'horloge de la caisse ne sont pas supérieurs aux seuils préalablement enregistrés dans la caisse.

Dans l'affirmative, grâce aux moyens de lecture présents dans la station de base de la caisse, il est procédé à la lecture des informations présentes dans la première zone de la mémoire de la puce 16, 26 et concernant la ou les pesées. La caisse procède au traitement éventuel des informations relatives au prix des produits pesés, à leur addition éventuelle avec le prix des autres produits choisis par le consommateur et celui-ci peut alors régler ses achats.

On peut également prévoir que, lors du passage en caisse, soit stockée dans la deuxième zone de la mémoire de la puce, la date du premier passage en caisse (ou de mise en service). Le commerçant peut ainsi prévoir de remplacer l'emballage après une période de temps déterminée à compter de la date de mise en service ou après un nombre d'utilisations déterminé.

On comprend que lorsque la matière constituant l'emballage est au moins semi-transparente, il n'est pas nécessaire d'ouvrir l'emballage pour vérifier que les produits ont bien été identifiés par le consommateur, puisqu'un contrôle visuel peut être fait directement.

Lorsque les moyens de fermeture de chaque compartiment sont conçus pour être inviolables, leur fermeture (contrôlée visuellement) garantit qu'ils n'ont pas été ouverts après la pesée et avant le passage en caisse.

Une fois l'achat terminé, le consommateur peut conserver les informations dans la puce ou les effacer. La puce peut être programmée pour effacer les informations après une période de temps déterminée, par exemple 10 ou 30 mm.

De préférence, l'effacement des données enregistrées dans la première zone de la mémoire de la puce est réalisé lors du passage en caisse, notamment après le paiement de ses achats par le consommateur.

Pour cela, les moyens de lecture/écriture de la station de base de la caisse commandent les moyens de verrouillage de la première zone de la mémoire pour déverrouiller celle-ci.

Ces moyens peuvent alors procéder à l'effacement des données.

Lorsque l'emballage est conçu pour des produits à la coupe, dans l'étape (a) du procédé, c'est le commerçant qui place le produit préalablement coupé par ses soins dans le récipient, puis le ferme avec le couvercle.

Le commerçant procède alors à l'étape (b) de pesée de l'emballage.

Comme précédemment, les informations relatives à la nature du produit, sa pesée et/ou son prix sont enregistrées dans la puce de l'emballage lors de l'étape (c).

Si l'emballage comporte plusieurs compartiments et couvercles, il peut être de nouveau utilisé par le commerçant en réitérant les étapes (a) à (c).

Ces étapes ne sont pas décrites de nouveau en détail.

Après fermeture du couvercle, des moyens garantissant l'inviolabilité, comme une pastille de scellement, peuvent être apposés sur l'emballage, afin de contrôler, lors du passage en caisse, que l'emballage n'a pas été ouvert.

Comme il va de soi et comme il résulte également de ce qui précède, la présente invention n'est pas limitée aux modes de réalisation plus particulièrement décrits. Elle en embrasse au contraire toutes les variantes et notamment celles où l'emballage comporte un seul compartiment, deux compartiments ou plus de trois compartiments, où il est dépourvu d'anse ou encore où il comporte une ouverture pour l'introduction des produits par sa paroi latérale, lorsqu'il présente la forme d'un sac. La présente invention est par contre limitée par l'objet des revendications ci-dessous.

De plus, lors de la fabrication du sac, un code-barres peut également être apposé sur celui-ci pour faciliter sa vente lors du passage en caisse.

## Revendications

1. Emballage réutilisable, comportant une puce électronique (16, 26) capable d'interagir avec une station de base comprenant des moyens de lecture/écriture, ladite puce comprenant une mémoire, **caractérisé en ce que** l'emballage est adapté pour recevoir des produits différents, offerts à la vente en vrac ou à la coupe, notamment des produits alimentaires, et **en ce que** la mémoire comprend une première zone qui peut être verrouillée après chaque opération d'écriture de la station de base, de façon à y stocker de manière successive et sécurisée des informations relatives à la nature des produits, leur pesée et/ou leur prix.

2. Emballage selon la revendication 1, dans laquelle la mémoire de la puce comprend une deuxième zone du type non volatile dans laquelle sont enregistrées de manière inaltérable les informations relatives à la date de fabrication de l'emballage, son identification et/ou au fabricant.

3. Emballage selon la revendication 1 ou 2, réalisé dans une matière au moins en partie transparente ou au moins en partie en une matière ajourée.

4. Emballage selon l'une quelconque des revendications 1 à 3, présentant la forme d'un récipient ou d'un sac délimitant au moins un compartiment.

5. Emballage selon l'une quelconque des revendications 1 à 4, comportant au moins deux compartiments (14a à 14c), (24a à 24c).

6. Emballage selon l'une des revendications 4 ou 5, dans lequel chaque compartiment comporte des moyens de fermeture.

7. Emballage selon la revendication 6, dans lequel lesdits moyens de fermeture sont inviolables.

8. Ensemble comportant un sac et plusieurs emballages selon l'une quelconque des revendications 1 à 7, lesdits emballages étant contenus dans ledit sac.

9. Procédé d'emballage et de pesée d'au moins un type de produits offerts en vente en vrac ou à la coupe, notamment des produits alimentaires, comprenant les étapes suivantes :
(a) dépôt de produits du même type dans un emballage selon l'une quelconque des revendications 1 à 7,
(b) pesée dudit emballage dans lequel lesdits produits ont été déposés sur une balance comportant une station de base avec des moyens de lecture/écriture et
(c) enregistrement des informations relatives à la nature des produits, leur pesée et/ou leur prix dans ladite première zone de la mémoire de la puce de l'emballage, cette première zone étant ensuite verrouillée.

10. Procédé selon la revendication 9, dans lequel les étapes (a) à (c) sont réitérées pour chaque type de produit, l'étape (b) étant alors une pesée différentielle.

11. Procédé selon l'une des revendications 9 à 10, suivi d'une étape (d) de règlement des achats, lors de laquelle il est procédé à la lecture de ladite première zone de la mémoire.

12. Procédé selon l'une des revendications 9 à 11, dans lequel l'étape (b) et/ou l'étape (d) est précédée d'une étape de détection/vérification de la puce dudit emballage.

13. Procédé selon la revendication 11 ou 12 dans lequel, après l'étape (d), ladite première zone de la mémoire est déverrouillée et effacée.

14. Système d'emballage et de pesée de produits offerts en vente en vrac ou à la coupe, notamment des produits alimentaires, comprenant :
- une balance comportant une station de base avec des moyens de lecture/écriture et
- au moins un emballage réutilisable selon l'une des revendications 1 à 7 capable d'interagir avec la station de base de la balance.

15. Système d'encaissement du prix de produits offerts en vente en vrac ou à la coupe, notamment des produits alimentaires, comprenant :
- un système d'emballage et de pesée selon la revendication 14 et
- une caisse comprenant une station de base avec des moyens de lecture/écriture, ledit au moins un emballage réutilisable étant capable d'interagir avec la station de base de la caisse.

## Patentansprüche

1. Wiederverwendbare Verpackung mit einem elektronischen Chip (16, 26), der mit einer Basisstation mit Lese-/Schreibmitteln interagieren kann,
**wobei** der Chip einen Speicher aufweist,
**dadurch gekennzeichnet,**
**dass** die Verpackung geeignet ist, unterschiedliche Produkte aufzunehmen, die lose oder am Stück zum Verkauf angeboten werden, insbesondere Lebensmittel, und dass der Speicher einen ersten Bereich aufweist, der nach jedem Schreibvorgang der Basisstation gesperrt werden kann, so dass sukzessive und gesichert Informationen über die Art, das Wiegen und/oder den Preis der Produkte darin gespeichert werden.

2. Verpackung nach Anspruch 1,
bei der der Chipspeicher einen zweiten nichtflüchtigen Bereich aufweist, in dem die Informationen über das Datum der Herstellung der Verpackung, ihre Identifizierung und/oder den Hersteller unveränderbar gespeichert werden.

3. Verpackung nach Anspruch 1 oder 2,
die aus einem mindestens teilweise durchsichtigen Material oder aus einem mindestens teilweise durchbrochenen Material hergestellt ist.

4. Verpackung nach einem der vorstehenden Ansprüche 1 bis 3,
welche die Form eines Behälters oder einer Tasche aufweist, die mindestens ein Fach begrenzen.

5. Verpackung nach einem der vorstehenden Ansprüche 1 bis 4,
die mindestens zwei Fächer (14a bis 14c), (24a bis 24c) aufweist.

6. Verpackung nach einem der Ansprüche 4 oder 5,
bei der jedes Fach Schließmittel aufweist.

7. Verpackung nach Anspruch 6,
bei der die Schließmittel unverletzlich sind.

8. Anordnung aus einer Tasche und mehreren Verpackungen nach einem der vorstehenden Ansprüche 1 bis 7,
**wobei** die Verpackungen in der Tasche enthalten sind.

9. Verfahren zum Verpacken und Wiegen mindestens einer Art von lose oder am Stück zum Verkauf angebotenen Produkten, insbesondere Lebensmitteln, umfassend die folgenden Schritte:
(a) Ablegen gleichartiger Produkte in einer Verpackung nach einem beliebigen der Ansprüche 1 bis 7,
(b) Wiegen der Verpackung, in der die Produkte abgelegt worden sind, auf einer Waage mit einer Basisstation mit Lese-/Schreibmitteln und
(c) Speicherung der Informationen über die Art, das Wiegen und/oder den Preis der Produkte in dem ersten Bereich des Speichers des Verpackungschips, wobei dieser erste Bereich anschließend gesperrt wird.

10. Verfahren nach Anspruch 9,
bei dem die Schritte (a) bis (c) für jede Produktart wiederholt werden,
**wobei** der Schritt (b) dann ein Differenz-Wiegen ist.

11. Verfahren nach einem der Ansprüche 9 bis 10,
mit einem anschließenden Schritt (d) der Begleichung der Einkäufe, bei dem das Lesen des ersten Speicherbereichs erfolgt.

12. Verfahren nach einem der Ansprüche 9 bis 11,
bei dem dem Schritt (b) und/oder dem Schritt (d) ein Schritt der Erfassung/Überprüfung des Chips der Verpackung vorangeht.

13. Verfahren nach Anspruch 11 oder 12,
bei dem nach dem Schritt (d) der erste Speicherbereich entsperrt und gelöscht wird.

14. System zum Verpacken und Wiegen von lose oder am Stück zum Verkauf angebotenen Produkten, insbesondere Lebensmitteln, mit:
- einer Waage mit einer Basisstation mit Lese-/Schreibmitteln und
- mindestens einer wiederverwendbaren Verpackung nach einem der Ansprüche 1 bis 7, welche mit der Basisstation der Waage interagieren kann.

15. System für die Kasseneingabe des Preises von lose oder am Stück zum Verkauf angebotenen Produkten, insbesondere Lebensmitteln, mit:
- einem Verpackungs- und Wiegesystem nach Anspruch 14 und
- einer Kasse mit einer Basisstation mit Lese-/Schreibmitteln, wobei die mindestens eine wiederverwendbare Verpackung mit der Basisstation der Kasse interagieren kann.

## Claims

1. Reusable package, adapted to receive products offered for sale loose or over the counter, in particular food products, comprising a microchip (16, 26) capable of interacting with a base station comprising read/write means, said chip comprising a memory, and in that the memory comprises a first zone which can be locked after each write operation of the base station, so as to store therein successively and securely information relating to the nature of the products, their weight and/or their price.

2. Package according to claim 1, in which the memory of the chip comprises a second zone of the non-volatile type in which are recorded unalterably the information relating to the date of manufacture of the package, its identification and/or the manufacturer.

3. Package according to claim 1 or 2, produced in an at least partly transparent material or an at least partly openwork material.

4. Package according to any one of claims 1 to 3, having the form of a receptacle or a bag delimiting at least one compartment.

5. Package according to any one of claims 1 to 4, comprising at least two compartments (14a to 14c), (24a to 24c).

6. Package according to one of claims 4 or 5, in which each compartment comprises closure means.

7. Package according to claim 6, in which said closure means are tamper-proof.

8. Assembly comprising a bag and a plurality of packages according to any one of claims 1 to 7, said packages being contained in said bag.

9. Method of packaging and weighing at least one type of product offered for sale loose or over the counter, in particular food products, comprising the following steps:
(a) deposition of products of the same type in a package according to any one of claims 1 to 7,
(b) weighing of said package on scales comprising a base station with read/write means and
(c) recording of the information relating to the nature of the products, their weight and/or their price in said first zone of the memory of the package chip, this first zone thereafter being locked.

10. Method according to claim 9, in which steps (a) to (c) are repeated for each type of product, step (b) then being differential weighing.

11. Method according to one of claims 9 to 10, followed by a step (d) of payment for purchases, during which reading of said first zone of the memory is carried out.

12. Method according to one of claims 9 to 11, in which step (b) and/or step (d) is preceded by a step of detection/verification of the chip of said package.

13. Method according to claim 11 or 12 in which, after step (d), said first zone of the memory is unlocked and erased.

14. System for packaging and weighing products offered for sale loose or over the counter, in particular food products, comprising:
- scales comprising a base station with read/write means and
- at least one reusable package according to one of claims 1 to 7 capable of interacting with the base station of the scales.

15. System for collecting the price of products offered for sale loose or over the counter, in particular food products, comprising:
- a packaging and weighing system according to claim 14 and
- a cash register comprising a base station with read/write means, said at least one reusable package being capable of interacting with the base station of the cash register.
